# EUROPEAN PATENT APPLICATION

(11) **EP 4 641 616 A1**
(43) Date of publication of application: **29.10.2025**
(21) Application number: 22968754.6
(22) Date of filing: 21.12.2022
(51) Int. Cl.: H01K 1/20, H02K 1/32, H02K 5/20, H02K 9/197

(54) **HOUSING OF A ROTARY ELECTRIC MACHINE**

(71) Applicant: Weg Equipamentos Electricos S.A., 89256-900 Jaraguá do Sul - SC (BR)
(72) Inventor: CARVALHO, Thiago Piazera De, 89252-090 Jaraguá do Sul - Santa Catarina (BR); TIBURSKI JUNIOR, Eliseu, 89254-552 Jaraguá do Sul - Santa Catarina (BR); SILVA, Ramon Gomes Da, 89258-476 Jaraguá do Sul - Santa Catarina (BR)
(74) Representative: Schlich
(86) International application number: PCT/BR2022/050518
(87) International publication number: WO 2024/130347

(57) **Abstract**

The present invention describes a rotating electric machine housing, comprising at least one cooling fluid inlet in the upper portion of the housing; at least one cooling fluid outlet in the lower portion of the housing; an inner surface with a first side of the inner surface and a second side of the inner surface, in which the first side and the second side are facing each other, the first side containing at least one set of first-sided recesses and the said second side containing at least one set of second-sided recesses; where the said at least one set of recesses on the first and second side comprise, respectively: at least one main channel, where at least one main channel extends radially on the inner surface of the housing, and where at least one main channel is connected to a plurality of lateral channels.

## Description

### TECHNICAL FIELD

The present invention refers to a rotating electric machine housing comprising, on its inner surface, recesses for the circulation of cooling fluid.

### BACKGROUND OF THE INVENTION

Rotating electric machines, or just electric machines, are widely known in the state of the art, and comprise the static part (stator and coil heads) and the rotating part (rotor). Depending on the application for which the electrical machine is intended, it must meet well-defined specifications, i.e., power, torque, corrosion resistance, complexity, and weight of the assembly. Electric machines also comprise an external housing, with the function of coupling the internal elements, protecting the entire machine assembly, and serving as a ground for the system.

During the operation of an electric machine, regardless of its application, the machine heats up. Overheating of the electric machine can cause machine problems, such as reduced service life and loss of machine performance.

According to the state of the art, a solution for the overheating of electric machines consists of applying a cooling fluid, preferably oil, but it can be any non-electrically conductive fluid, to the active parts of the motor.

In this regard, the invention patent application No. US 20210044172 A1, published on February 11, 2021, in the name of DANA HEAVY VEHICLE SYS GROUP and entitled: *"Electric axle assembly"* describes a *"cooling jacket"* type housing for electric motor having protrusions adapted for contact with the stator surface, with fluid passages formed by the cooling jacket body, the bulges and surface of the electric motor stator, in which fluid passages are arranged to allow a cooling fluid to flow in a serpentine path through the surface of the stator to remove heat from the stator. The spray rings are fluidly coupled to the fluid passages so as to allow cooling fluid to flow into the fluid passages, through the outer circumference of the electric motor stator and out of the holes in the spray rings to cool the stator windings. The bulges are obtained using a pair of anti-symmetrically aligned casting molds, so that a serpentine fluid path is formed when shaping the cooling jacket body. This document uses a fluidic circuit in the housing with a serpentine format, without using longitudinal and unidirectional channels. Also, the housing is formed by more than one element, namely, the jacket or *"cooling jacket",* a first member and a second member arranged at each of the ends, one of the elements being associated with spray rings. The housing of the aforementioned document is not formed by just one part comprising all the elements cited, and the housing of said document is highly complex.

International publication No. WO2019/91351 A1, published on May 16, 2019, on behalf of HUAWEI TECH CO LTD and titled: *"Motor, power assembly, power device, and motor cooling method"* reveals a motor comprising a housing and an oil cooling mechanism. The oil cooling mechanism comprises: a stator cooling oil tank provided on a first inner wall of a housing opposite a stator, a cooling oil tank, an oil inlet channel provided at the top of the housing, and an oil outlet channel provided at the bottom of the housing. The oil cooling mechanism causes a cooling oil to come into direct contact with the outer wall of the stator and the final winding. This document uses a fluidic circuit in the housing composed of U-shaped channels, without using longitudinal and axial channels. In addition, the aforementioned document uses an oil spill element arranged in the portion above the coil head, and this housing of the aforementioned document is of high complexity.

Chinese utility model No. CN 207677580 U, published on July 31, 2018, on behalf of NINGBO BAOSI ENERGY EQUIPMENT CO LTD and titled: *"Cold motor of oil with spiral oil duct"* describes an electric motor with spiral oil duct, including housing, stator and rotor. The motor housing is adjacent to the outer surface of the stator, and its inner surface is equipped with grooves for oil passage. The motor housing is equipped with oil inlet and outlet, and the said inlet and outlet are respectively connected to both ends of the oil duct. This document uses a fluidic circuit in the housing with spiral-shaped channels along the inner surface of the housing, without using longitudinal and axial channels. Also, the document does not teach about providing means for the cooling oil to come into direct and intentional contact with the coil head of the stator. In such a document, the oil only cools the outer surface of the stator plate pack.

International publication No. WO2012/50741 A2, published on April 19, 2012, on behalf of REMY TECHNOLOGIES LLC and entitled: "*Electric machine cooling system and method*" describes an electric machine with a stator and housing circumscribing at least partially the electric machine. The housing includes at least two housing members coupled and substantially securing the electrical machine inside the housing. The electrical machine module also includes a cooling jacket at least partially defined by an outer diameter of the stator and an inner diameter portion of the housing. That document describes, therefore, a split housing.

As can be seen above, there is a great deal of effort in the state of the art to achieve an electric machine with a cooling system or a method to cool the electric machine efficiently.

However, a problem with the state of the art is the fact that the housing requires additional construction elements to cool the electric machine, especially the stator and the coil heads, increasing the complexity of the machine and, consequently, increasing the final cost and reducing its cost/benefit.

In addition, a further problem with the state of the art is the fact that there is no adequate heat dissipation between the cooling fluid and the active parts of the machine.

Thus, the present invention has as one of its objectives to solve the problems mentioned above by providing an electrical machine housing comprising, on its internal surface, recesses for the circulation of cooling fluid, and the housing contains internal channels for the circulation of the cooling fluid, the cooling fluid, preferably oil, being in direct contact with the active parts of the machine. The electrical machines containing the housing of this invention exhibit an increase in heat dissipation capacity and greater efficiency, in addition to less complexity and, consequently, lower final cost and a higher cost/benefit in relation to the already known electrical machines.

### SUMMARY OF THE INVENTION

It is one of the objectives of the present invention to provide a rotating electric machine housing that does not require additional construction elements to cool the stator and coil heads present in said electric machine.

It is also an objective of the present invention to provide electrical machines containing the housing of the present invention, which exhibits increased heat dissipation capacity and greater efficiency.

Another objective of this invention is to provide a rotating electric machine housing of lower complexity and, consequently, lower final cost and a higher cost/benefit ratio in relation to electrical machines already known in the state of the art.

It is yet another objective of the present invention to provide an electric machine housing with channels for fluid passage with optimized geometry.

It is one of the goals of the present invention to provide an electrical machine housing that incorporates directing elements for the cooling fluid in a single cast or injected mold.

These objectives are achieved by means of a rotating electric machine housing comprising:
at least one cooling fluid inlet in the upper portion of the housing;
at least one cooling fluid outlet in the lower portion of the housing;
an inner surface with a first side of the inner surface and a second side of the inner surface, in which the first side and the second side are facing each other,
the first side containing at least one set of first-sided recesses and the said second side containing at least one set of second-sided recesses;
in which the said at least one set of first and second side recesses comprise, respectively:
   at least one main channel, at least one main channel extending radially across the inner surface of the housing,
   and since the referred at least one main channel is connected to a plurality of lateral channels.

Still, according to the present invention, at least one main channel can be aligned with at least one cooling fluid inlet.

According to the present invention, at least one main channel can be near at least one cooling fluid inlet.

In addition, the lateral channels extend in a longitudinal direction on the inner surface of the housing and are arranged parallel to each other.

Another characteristic of the lateral channels is that they are angled and taper towards the farthest end of at least one main channel or taper towards the nearest end of at least one main channel. In addition, these lateral channels can have a curved or straight shape and have a constant thickness, said thickness being from 5 to 50% of the total thickness of the housing wall that incorporates the lateral channels.

According to the present invention, sets of recesses are symmetrical or asymmetrical.

Also, according to the present invention, at least one cooling fluid inlet is arranged in the central part of the upper portion and at least one cooling outlet is arranged in the central part of the lower portion.

### BRIEF DESCRIPTION OF THE DRAWINGS

The objectives and advantages of the present invention will be made clearer by the following detailed description of the examples and non-limiting drawings presented at the end of this document:
Figure 1 illustrates a perspective view of the housing according to an embodiment of the present invention.
Figure 2 illustrates a longitudinal sectional view showing the first side of the housing according to an embodiment of the present invention.
Figure 3 illustrates a longitudinal sectional view showing the second side of the housing according to an embodiment of the present invention.
Figure 4 illustrates a longitudinal sectional view showing the first side of the housing in line with another embodiment of the present invention.
Figure 5 illustrates a longitudinal sectional view showing the second side of the housing in accordance with another embodiment of the present invention.

### DETAILED DESCRIPTION

Although the present invention may be susceptible to different embodiments, a preferred embodiment is shown in the following detailed discussion with the understanding that the present description should be considered an example of the principles of the invention and that the present invention is not intended to be limited to what has been illustrated and described here.

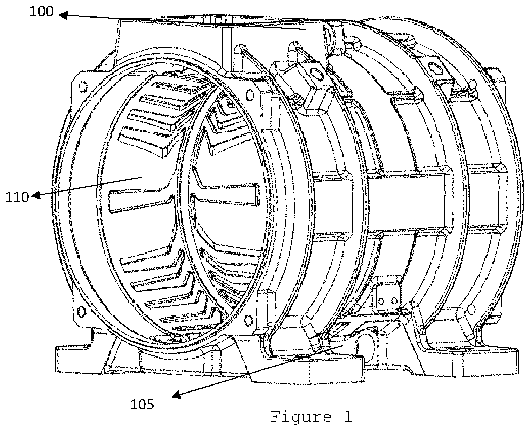

According to Figure 1, the housing of an electric machine, according to an embodiment of the present invention, comprises an upper portion 100, a lower portion 105 and an inner surface 110.

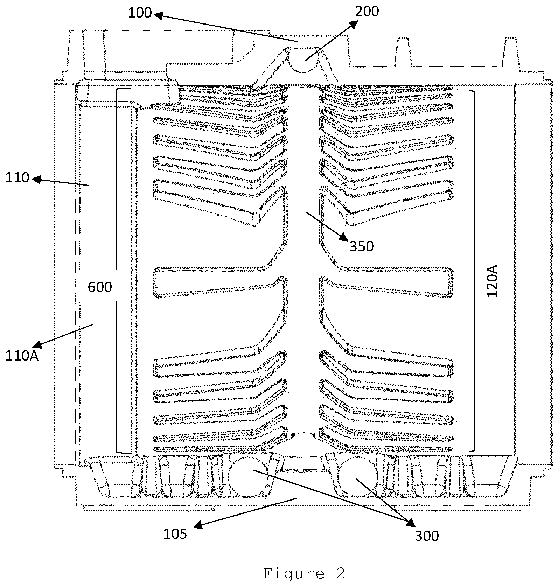

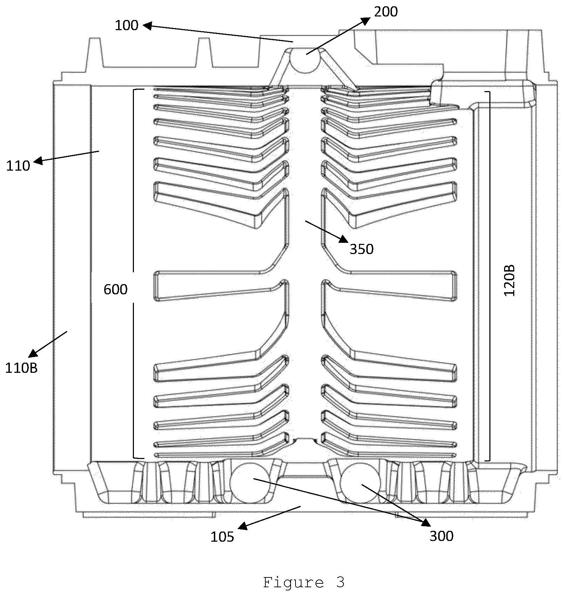

Figures 2 and 3 show a cooling fluid inlet 200 arranged in the center of the upper portion 100, and two cooling outlets 300 arranged on a first side of the inner surface 110A and a second side of the inner surface 110B in the center of the lower portion 105, where the first side of the inner surface 110A and the second side of the inner surface 110B face each other. In another embodiment, a cooling outlet 300 is arranged on the first side of the inner surface 110A and a second outlet 300 is arranged on the second side of the inner surface 110B. In other embodiments, two or more cooling fluid inlet 200s can be used and one, three or more cooling fluid outlets 300 can be used. In addition, the cooling fluid inlets and outlets, instead of being arranged in the center of the upper portion and in the center of the lower portion, respectively, may be located in parts closer to the ends of the housing. Therefore, according to the present invention, at least one cooling fluid inlet 200 and at least one cooling outlet 300 are used.

Figures 2 and 3 also show the internal surface 110 comprising the first side of the internal surface 110A containing a set of recesses of the first side 120A and the second side of the internal surface 110B containing a set of recesses of the second side 120B, and the referred sets of recesses 120A, 120B are preferably symmetrical. In another embodiment, the said sets of recesses 120A, 120B are asymmetrical. In other embodiments, depending on the size of the housing and the sets of recesses, more than one set of recesses can be used on each side of the inner surface. Therefore, according to the present invention, the first side of inner surface 110A comprises at least one set of first-side recesses 120A, and the second recess side 110B comprises at least one set of second-side recesses 120B.

Also, according to Figures 2 and 3, the set of first-sided recesses 120A and the set of second-sided recesses 120B comprise, respectively, a main channel 350 that extends radially on the inner surface 110 of the housing. Additionally, said main channel 350 is aligned with at least one cooling fluid inlet 200, i.e., the upper portion of main channel 350 is physically associated with said cooling fluid inlet 200. In other embodiments, the main channel 350 is close to the cooling fluid inlet 200, i.e. the main channel 350 and the fluid inlet 200 are not physically associated with each other.

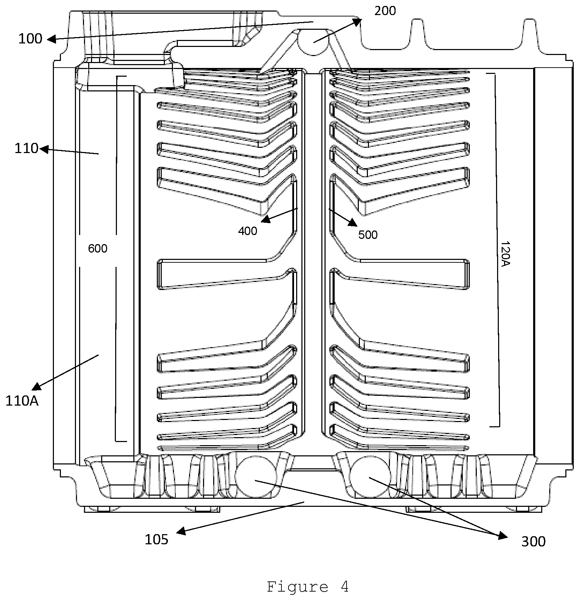

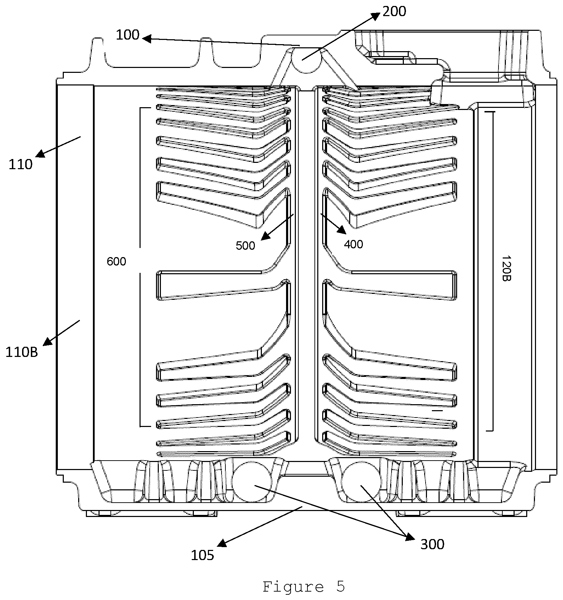

In other embodiments, the so-called sets of recesses 120A, 120B comprise two, three or more main channels that extend radially and parallel to the inner surface 110. For example, according to Figures 4 and 5, the first-sided recess set 120A and the second-sided recess set 120B comprise, respectively, a first main channel 400 and a second main channel 500, and the first 400 and second main channels extend radially and parallel to each other on the inner surface 110 of the housing.

Therefore, according to the present invention, the said sets of recesses 120A, 120B comprise at least one main channel 350 extending radially on the inner surface 110.

At least one main channel 350 is connected to a plurality of lateral channels 600.

The lateral channels 600 are arranged parallel to each other and extend in a longitudinal direction on the inner surface 110 of the housing. Thus, the lateral channels 600 extends towards the ends of the housing.

According to one embodiment, lateral channels 600 are angled and taper toward the far end of the main channel or toward the closest end of the main channel. In other implementations, the lateral channels 600 can have other shapes, for example, the lateral channels 600 can be curved or straight and of constant thickness, the said thickness being from 5 to 50% of the total thickness of the housing wall that incorporates the lateral channels 600.

Thus, according to the present invention, the cooling fluid enters the housing through the 200 fluid inlet, flows through the inner surface 110 into the main channel 350 and the lateral channels 600, and then exits through the outlet 300, being drained and reused to cool the electric machine again.

In addition to the implementation presented above, the same inventive concept can be applied to other alternatives or possibilities of using the invention. For example, a very long housing may have several assemblies comprising main and lateral channels.

Although the present invention has been described in relation to certain preferred specifications, it must be understood that it is not intended to limit the invention to those particular specifications. Rather, it is intended to encompass all possible alternatives, modifications, and equivalences within the spirit and scope of the invention, as defined by the attached claims.

## Claims

1. Rotating electric machine housing **characterized by the** fact that it comprises:
at least one cooling fluid inlet (200) in the upper portion (100) of the housing;
at least one cooling fluid outlet (300) in the lower portion (105) of the housing;
an inner surface (110) with a first inner surface side (110A) and a second inner surface side (110B), where the first side (110A) and the second side (110B) face each other,
the said first side (110A) containing at least one set of first-sided recesses (120A) and the said second side (110B) containing at least one set of second-sided recesses (120B);
where said at least one set of first and second side recesses (120A,120B) comprise, respectively:
at least one main channel (350), of which at least one main channel (350) extends radially across the inner surface (110) of the housing,
and since the referred at least one main channel (350) is connected to a plurality of lateral channels (600).

2. Rotating electric machine housing according to claim 1, **characterized by** the fact that the at least one main channel (350) is aligned with at least one cooling fluid inlet (200).

3. Rotating electric machine housing according to claim 1, **characterized by** the fact that the at least one main channel (350) is close to at least one cooling fluid inlet (200).

4. Rotating electric machine housing according to claim 1, **characterized by** the fact that the lateral channels (600) extend in a longitudinal direction on the inner surface (110) of the housing and are arranged parallel to each other.

5. Rotating electric machine housing according to claim 1, **characterized by** the fact that the lateral channels (600) are angled and taper towards the farthest end of at least one main channel (350).

6. Rotating electric machine housing according to claim 1, **characterized by** the fact that the lateral channels (600) are angled and taper towards the nearest end of at least one main channel (350).

7. Rotating electric machine housing according to claim 1, **characterized by** the fact that the lateral channels (600) have a curved or straight shape and of constant thickness, said thickness ranging from 5 to 50% of the total thickness of the housing wall that incorporates the lateral channels (600).

8. Rotating electric machine housing according to claim 1, **characterized by** the fact that the first set of recesses (120A) and the second set of recesses (120B) are symmetrical or asymmetrical.

9. Rotating electric machine housing according to claim 1, **characterized by** the fact that the at least one cooling fluid inlet (200) is arranged in the central part of the upper portion (100) and the at least one cooling outlet (300) is arranged in the central part of the lower portion (105).

10. Rotating electric machine housing according to claim 1, **characterized by the** fact that it incorporates directing elements for the cooling fluid in a single cast or injected mold.
